# EUROPÄISCHE PATENTSCHRIFT

(11) **EP 1 538 317 B1**
(45) Veröffentlichungstag und Bekanntmachung des Hinweises auf die Patenterteilung: **14.06.2006**
(21) Anmeldenummer: 05005090.5
(22) Anmeldetag: 10.03.2000
(51) Int. Cl.: F02B 23/10

(54) **Direkteinspritzende Otto-Brennkraftmaschine**
Direct injected spark ignited internal combustion engine
Moteur à combustion interne à injection directe et à allumage commandé

(30) Priorität: 12.03.1999 DE 19911023
(43) Veröffentlichungstag der Anmeldung: 08.06.2005
(62) Teilanmeldung aus: 00909349.3
(73) Patentinhaber: DaimlerChrysler AG, 70567 Stuttgart (DE)
(72) Erfinder: Ernst, Johannes, Dr., 76534 Baden-Baden (DE); Ganz, Benedikt, Dr., 76477 Elchesheim-Illingen (DE); Klenk, Rolf, Dr., 70327 Stuttgart (DE); Rössler, Klaus, 70499 Stuttgart (DE)

(56) Entgegenhaltungen:
- EP-A- 0 835 994
- DE-A- 19 546 945
- DE-C- 19 642 653
- GB-A- 2 233 390

## Beschreibung

Die Erfindung betrifft eine direkteinspritzende Otto-Brennkraftmaschine der im Patentanspruch 1 bzw. Patentanspruch 2 angegebenen Gattung.

Bei direkteinspritzenden Otto-Brennkraftmaschinen ist ein Brennraum in jedem Zylinder von einem längsbeweglichen Kolben und der Innenwand eines Zylinderkopfes begrenzt, wobei ein Injektor Kraftstoff zur inneren Gemischbildung mit separat zugeführter Verbrennungsluft in den Brennraum einspritzt. Die Zusammensetzung des Kraftstoff/Luft-Gemisches muß im Bereich der Zündkerze innerhalb des zündfähigen Fensters liegen, um mittels eines Zündfunkens zündbar zu sein, welcher zwischen den Elektroden einer Zündkerze auslösbar ist.

Aus der EP 835994 A2 ist eine direkteinspritzende Brennkraftmaschine bekannt, welche einen Pultdachförmigen Brennraum und einen mittig angeordneten Injektor aufweist, wobei die Elektroden der Zündkerze in der Nähe des Einlaßventils angeordnet sind. Der Kraftstoff wird in Form eines Hohlkegels in einen Kolben eingespritzt, der eine Mulde mit einem kreisförmigen vorstehenden Teil aufweist, und prallt gegen die Kolbenmulde. Der dabei gestreute Kraftstoff wird durch eine Tumbleströmung zu den Elektroden der Zündkerze transportiert, wobei der kreisförmige vorstehende Teil der Kolbenmulde den zerstäubten Kraftstoff daran hindert, in Richtung der Zylinderwand gestreut zu werden, wodurch eine stabile Schichtlade-Verbrennung gewährleistet wird.

Aus der DE 196 42 653 C1 ist ein Verfahren zur Bildung eines zündfähigen Gemisches im Brennraum einer direkteinspritzenden Brennkraftmaschine bekannt, bei dem ein Injektor verwendet wird, mit dem der Öffnungshub des Ventilgliedes und die Einspritzzeit variabel einstellbar sind, so dass insbesondere im Schichtladungsbetrieb eine verbrauchs- und emissionsoptimierte innere Gemischbildung ermöglicht wird. Weiterhin sieht die DE 196 42 653 C1 vor, dass die Elektroden der Zündkerze in eine Gemischwolke einragen und bei geringfügigen Ablagerungen infolge Kraftstoffbenetzung während des Einspritzvorgangs zuverlässig zünden sollen.

Aus der DE 195 46 945 A1 ist eine direkteinspritzende Brennkraftmaschine bekannt, deren Injektoren mit ihren Einspritzdüsen den Kraftstoff kegelförmig in den Brennraum einspritzen, wobei die Zündkerze derart angeordnet ist, daß ihre Elektroden außerhalb der Mantelfläche des von der Einspritzdüse erzeugten Kraftstoffkegels liegen. Auf diese Weise wird eine Benetzung der Elektroden mit Kraftstoff beim Einspritzvorgang vermieden und der Rußablagerung auf den Elektroden aufgrund unvollständig verbrannten Kraftstoffes entgegengewirkt. Die Elektroden sind über einen langen Betriebszeitraum von Verkokungen frei, wodurch ein ordnungsgemäßes Arbeiten der Brennkraftmaschine ohne Zündaussetzer gewährleistet sein soll. Um zündfähiges Gemisch zwischen die außerhalb des Kraftstoffkegels angeordneten Elektroden zu bringen, ist die Zündkerze derart angeordnet, daß die Masseelektrode mit einem geringen Abstand zur Mantelfläche des Kraftstoffkegels liegt und die Innenwand des Zylinderkopfes parallel zur Mantelfläche des Kraftstoffkegels verläuft unter Ausbildung eines Zwischenraumes zumindest an derjenigen Stelle, an der die Elektroden der Zündkerze angeordnet sind.

In dem Zwischenraum soll sich eine Wirbelströmung ergeben, welche aus Kraftstoff/Luft-Gemisch besteht und in den Bereich der Elektroden reicht. Um die Wirbelströmung zu generieren, ist eine besondere Formgebung der Innenwand und eine injektornahe Anordnung der Zündkerze erforderlich. Der Injektor ist in einer Einsenkung der Innenwand angeordnet, also vom freien Brennraumvolumen zurückgesetzt, wodurch der Gemischwirbel in dem der Einspritzdüse benachbarten Bereich entstehen und in dem Hohlraum zirkulieren soll, welcher zwischen der Mantelfläche des Kraftstoffkegels und der Innenwand des Zylinderkopfes im Bereich der Einspritzdüse gebildet ist. Des weiteren soll durch den Luftspalt zwischen dem Kraftstoffkegel und der parallelen, ebenso kegelförmigen Innenwand des Zylinderkopfes Luft zurückströmen, die von dem in den Brennraum eingespritzten Kraftstoff verdrängt wurde. Während der Rückströmung zur Zündkerze entlanry der Innenwand sollen weitere Kraftstoffteilchen aus dem Kraftstoffkegel mitgerissen werden. Die Wirbelströmung ist im injektornahen Bereich genügend stark ausgebildet, um zündfähiges Gemisch zwischen die Elektroden einer Zündkerze zu bringen. Die Zündkerze muß demnach nahe dem Injektor angeordnet sein.

Bei der bekannten direkteinspritzenden Otto-Brennkraftmaschine muß die Brennraumbegrenzung insbesondere durch die Innenwand des Zylinderkopfes mit hohem Aufwand präzise gestaltet werden, um die gewünschten strömungstechnischen Effekte zur Bildung der zündfähigen Gemischwirbel zu erreichen. Die bekannte Brennraumkonfiguration mit der zur Gemischwirbelbildung erforderlichen Brennraumform und der zwangsläufig injektornah angeordneten Zündkerze kann oftmals einen optimalen Verbrennungsvorgang nicht erreichen und das gewünschte Betriebsverhalten der Brennkraftmaschine gewährleisten.

Der vorliegenden Erfindung liegt die Aufgabe zugrunde, die direkteinspritzende Otto-Brennkraftmaschine der gattungsgemäßen Art derart auszubilden, daß die Brennkraftmaschine mit optimalem Betriebsverhalten arbeitet.

Diese Aufgabe wird erfindungsgemäß mit den Merkmalen des Anspruchs 1 bzw. des Anspruchs 2 gelöst.

Gemäß einem ersten Aspekt der Erfindung zeichnet sich das erfindungsgemäße Verfahren zum Betrieb einer direkteinspritzenden fremdgezündeten Brennkraftmaschine dadurch aus, dass die Brennkraftmaschine einen Brennraum, der in jedem Zylinder von einem längsbeweglichen Kolben mit einer Kolbenmulde und der Innenwand eines Zylinderkopfes begrenzt ist, und einen Injektor mit einer Einspritzdüse aufweist, wobei dem Brennraum Verbrennungsluft separat zugeführt wird, zur Bildung eines zündfähigen Kraftstoff/Luft-Gemisches Kraftstoff in einem Schichtladungsbetrieb während des Kompressionshubs mittels der Einspritzdüse in den Brennraum als ein von der Brennraumbegrenzung unbeeinflusster Freistrahl hohlkegelförmig eingespritzt wird, und der Kraftstoff möglichst senkrecht zur Oberfläche eines öffnenden Ventilglieds aus dem Injektor austritt, wobei die Elektroden der Zündkerze außerhalb der Mantelfläche des von der Einspritzdüse erzeugten Kraftstoffkegels liegen, und das Gemisch von der Zündkerze gezündet wird.

Gemäß einem zweiten Aspekt der Erfindung zeichnet sich das erfindungsgemäße Verfahren zum Betrieb einer direkteinspritzenden fremdgezündeten Brennkraftmaschine dadurch aus, dass die Brennkraftmaschine einen Brennraum, der in jedem Zylinder von einem längsbeweglichen Kolben mit einer Kolbenmulde und der Innenwand eines Zylinderkopfes begrenzt ist, und einen Injektor mit einer Einspritzdüse aufweist, wobei in den Brennraum Verbrennungsluft in Form einer Tumblebewegung eingebracht wird, und zur Bildung eines zündfähigen Kraftstoff/Luft-Gemisches Kraftstoff in einem Schichtladungsbetrieb während des Kompressionshubs mittels der Einspritzdüse in den Brennraum als ein von der Brennraumbegrenzung unbeeinflusster Freistrahl hohlkegelförmig eingespritzt wird, wobei die Elektroden der Zündkerze außerhalb der Mantelfläche des von der Einspritzdüse erzeugten Kraftstoffkegels liegen, und das Gemisch von der Zündkerze gezündet wird.

Bei der erfindungsgemäßen Brennraumkonfiguration wird der Kraftstoffkegel in einem von der Brennraumbegrenzung nahezu unbeeinflußten Freistrahl eingespritzt, d.h. der Kraftstoffkegel wird in einem derartig großen Abstand, insbesondere von der Innenwand des Zylinderkopfes eingespritzt, daß sich der kegelförmige Kraftstoffstrahl weitgehend ohne strömungsmechanische Wandeffekte der Brennraumbegrenzung im freien Brennraumvolumen ausbreitet. Dabei bilden sich bei der Einspritzung aus der Mantelfläche des Kegels hervortretende Kraftstoffwirbel, welche zunächst hauptsächlich aus Kraftstoffdampf bestehen und sich mit der umliegenden Verbrennungsluft im Brennraum vermischen. Die Kraftstoffwirbel bilden sich besonders deutlich aus, wenn der Öffnungswinkel des Kraftstoffstrahlkegels zwischen 70° und 110° beträgt und werden durch eine Luftströmung erzeugt, welche im Bereich der Mantelfläche des Kraftstoffkegels aufgrund vom Kraftstoffstrahl mitgerissener Luft entsteht, wobei in entgegengesetzter Richtung durch den entstehenden Unterdruck ebenfalls eine Luftströmung erzeugt wird. Die Zündkerze wird erfindungsgemäß derart positioniert, daß die Elektroden in den Kraftstoffwirbel des Freistrahls einragen. Vorzugsweise ist die Funkenlage der Elektroden 1 mm bis 15 mm von der Mantelfläche des Kraftstoffkegels entfernt.

Der Kraftstoffwirbel, welcher zündfähiges Gemisch zwischen die Elektroden bringt, bildet sich an der Mantelfläche des Freistrahls ohne wirksamen Einfluß von der Brennraumbegrenzung aus, so daß die Brennraumform frei gestaltbar ist. Es liegt ein sogenanntes strahlgeführtes Brennverfahren vor, bei dem Wandeffekte der Innenwand des Zylinderkopfes oder etwa einer Kolbenmulde kaum Einfluß auf die Gemischbildung und die Zündung ausüben. Insbesondere im Schichtladungsbetrieb der Brennkraftmaschine, wenn mit Kraftstoffeinspritzung während des Kompressionshubes gearbeitet wird und bei luftgefülltem Brennraum eine zentrale Kraftstoffwolke gebildet wird, kann so mit einer einfachen Brennraumgestaltung ein optimales Durchbrennen der Brennraumladung erreicht werden. Ein weiterer Vorteil der erfindungsgemäßen Gemischbildung ist darin zu sehen, daß die Zündkerze weiter als bisher vom Injektor entfernt angeordnet sein kann. Der Kraftstoffwirbel liegt lange stabil nahezu an derselben Stelle im Brennraum, wodurch die Zündung in einem weiten Zeitintervall unabhängig vom Einspritzpunkt erfolgen kann.

Der Kraftstoff-Freistrahl wird vorzugsweise hohlkegelförmig in den Brennraum eingespritzt. Hierdurch bilden sich die Kraftstoffwirbel in einer besonders zum Gemischtransport zur Zündkerze geeigneten Form aus, insbesondere bei einer Einspritzung bei hohem Zylinderdruck in der Kompressionsphase während des Schichtladungsbetriebes. Zur Ausbildung des vorteilhaften Hohlkegelstrahls wird zweckmäßig ein Injektor mit einer nach außen öffnenden Einspritzdüse eingesetzt. Die Einspritzdüse sollte dabei derart ausgestaltet sein, daß der Kraftstoff möglichst senkrecht zur Oberfläche des öffnenden Ventilgliedes aus dem Injektor austritt, so daß Ablagerungen und der Bildung von Verkokungen entgegengewirkt ist. Vorteilhaft können Einspritzdüsen mit Drallerzeugern eingesetzt werden oder auch Injektoren mit zwei Magnetspulen zur Bewegung des nach außen öffnenden Ventilgliedes. Auch nach innen, also in den Innenraum des Injektors öffnende Einspritzdüsen können vorteilhaft sein, welche einen ausgeprägten Hohlkegelstrahl erzeugen. Dadurch ergibt sich eine stärkere Kraftstoffkonzentration am Strahlrand mit mehr als 2/3 der gesamten Einspritzmenge im äußeren Drittel des Kraftstoffkegels. Zur Ausbildung des Hohlkegelstrahls können auch vorteilhaft Injektoren mit Mehrlochdüsen eingesetzt werden, wobei die Kraftstofföffnungen der Mehrlochdüse derart angeordnet sind, daß sich aus den durchtretenden Einzelstrahlen bei der Kraftstoffeinspritzung ein Hohlkegelstrahl ergibt. Grundsätzlich kann jeder Injektor für die erfindungsgemäße Kraftstoffeinspritzung in einem Freistrahl geeignet sein, der mit seinem konstruktiven Aufbau einen ausgeprägten Hohlkegelstrahl erzeugt.

Zur Ausbildung ausgeprägter Kraftstoffwirbel am Einspritzkegel wird der Injektor derart angeordnet, daß ein Winkel zwischen einer Symmetrieachse des Kraftstoffkegels und einer Zylinderachse des Zylinders weniger als 25° beträgt. Die Einspritzdüse sollte in einem Abstand von weniger als 20 mm von der Zylinderachse entfernt liegen. Zweckmäßig wird der Injektor zentral im Brennraum angeordnet, wobei die Symmetrieachse des eingespritzten Kraftstoffkegels mit der Zylinderachse des Zylinders zusammenfällt.

In einer vorteilhaften Weiterbildung der Erfindung sind pro Zylinder zwei Zündkerzen vorgesehen. Durch eine Doppelzündung, bei der beide Zündkerzen Zündfunken ausbilden, kann das Risiko von Zündaussetzern vermindert werden. Auch unter extremen Betriebsbedingungen der Brennkraftmaschine, wenn gegebenenfalls der Kraftstoffwirbel zu mageres Gemisch zwischen die Elektroden einer Zündkerze transportiert, so kann doch die Zündung durch die jeweils andere Zündkerze sichergestellt werden. Die beiden Zündkerzen können in gleicher Entfernung vom Injektor im Brennraum angeordnet sein. Liegen die Zündkerzen mit ihren jeweiligen Funkenlagen in unterschiedlichen Abständen zum Injektor, so kann in Abhängigkeit des Betriebspunktes der Brennkraftmaschine jeweils die Zündkerze zur Zündung eingesetzt werden, welche bezüglich der Ausbildung der Kraftstoffwirbel günstiger liegt. Die Lage der Kraftstoffwirbel wird vom Gegendruck im Brennraum beeinflußt, so daß die zur Zündung optimale Funkenlage abhängig von den Betriebsbedingungen der Brennkraftmaschine wie dem Einspritzzeitpunkt im Kennfeld der Brennkraftmaschine unterschiedlich ist. Auf diese Weise kann die Zündung des Kraftstoffwirbels auf jeden Fall durch eine der zündenden Zündkerzen mit unterschiedlichen Funkenlagen relativ zum Kraftstoffkegel sichergestellt werden.

Vorteilhaft ist eine Steuereinheit vorgesehen, welche in Abhängigkeit der Betriebsbedingungen bestimmt, welche der beiden Zündkerzen zur Zündung des Kraftstoff/Luft-Gemisches eingesetzt wird. Dabei wird abhängig von der Betriebsart (Schichtladung oder homogene Gemischbildung) und den Betriebsbedingungen die Zündung am jeweils günstigsten Zündort sichergestellt, an dem die aus dem Kraftstoffkegel hervortretenden Kraftstoffwirbel die Elektroden der entsprechenden Zündkerze erfaßt.

Die Gemischbildung im Brennraum kann durch geeignete Lenkung der einströmenden Verbrennungsluft verbessert werden. Beispielsweise kann die Verbrennungsluft in einer Tumble-Bewegung in den Brennraum eingebracht werden, wobei die Verbrennungsluft in etwa kreisförmiger Bewegung in einer Ebene der Zylinderachse rotiert. Eine effektive Zündung wird dabei durch die Zündkerze gewährleistet, welche in einem hinteren Abschnitt des Strömungsweges der Verbrennungsluft im Brennraum liegt. Bei einer Tumble-Strömung mit zunächst etwa parallel zum Brennraumdach einströmender Verbrennungsluft wird die Zündkerze daher vorzugsweise im Bereich des Lufteinlasses angeordnet, das heißt benachbart des Einlaßventils, beispielsweise zwischen zwei Einlaßventilen bei Mehrventilmotoren. Bei umgekehrter Tumble-Strömung (Reverse-Tumble) wird die Zündkerze entsprechend vorzugsweise auf der Auslaßseite angeordnet. Des weiteren kann die Gemischbildung der erfindungsgemäßen Otto-Brennkraftmaschine mit Kraftstoffeinspritzung in einem Freistrahl durch drallförmige Ladungsbewegung im Brennraum verbessert werden. Mit einer Drallströmung der Verbrennungsluft um die Zylinderachse können bei der Gemischbildung Unsymmetrien und Strähnigkeit des eingespritzten Kraftstoffstrahls vermindert werden und somit die Zündbedingungen im Bereich der am Kraftstoffkegel hervortretenden Wirbel verbessert werden. Der Drall kann durch entsprechend geformte Einlaßkanäle, sogenannte Drall- oder Spiralkanäle, durch Versetzung der Einlaßventile oder gedrehtem Ventilstern oder bei Mehrventilmotoren mittels Ventilabschaltung oder verstellbaren Drosselelementen im Ansaugtrakt erzeugt werden.

Der optimale Öffnungswinkel des Kraftstoffkegels im Winkelbereich zwischen 70° und 110° zur Ausbildung kräftiger Kraftstoffwirbel im Strahlrandbereich ist abhängig von der Brennraumform, insbesondere vom Anstellwinkel der Ventilachsen der Gaswechselventile. Bei einem Dachwinkel des Brennraumdaches von 180° beträgt der optimale Strahlwinkel des Kraftstoffkegels etwa 90°. Es hat sich als vorteilhaft herausgestellt, den Öffnungswinkel des Kraftstoffkegels bei einer Abnahme des Dachwinkels von etwa 10° um etwa 1° bis 2° zu reduzieren. Gute Gemischkonfigurationen werden in einem Akzeptanzbereich von etwa 20° oberhalb und unterhalb des theoretisch optimalen Öffnungswinkels des Kegelstrahls erreicht, also im Winkelbereich von etwa 70° bis 110°.

Die Zündung erfolgt vorzugsweise nach dem Ende des Einspritzvorganges etwa 0,1 ms bis 1,5 ms nach dem Einspritzende.

Ein Ausführungsbeispiel der Erfindung ist nachstehend anhand der Zeichnung näher erläutert. Es zeigen:
- Fig. 1: einen Längsschnitt durch eine Otto-Brennkraftmaschine,
- Fig. 2: eine Vergrößerung eines Endabschnittes der Ventilnadel eines Injektors,
- Fig. 3: in schematischer Darstellung die Lage des Kraftstoffes im Brennraum nach der Einspritzung,
- Fig. 4: einen Querschnitt durch eine Otto-Brennkraftmaschine mit einer Doppelzündung.

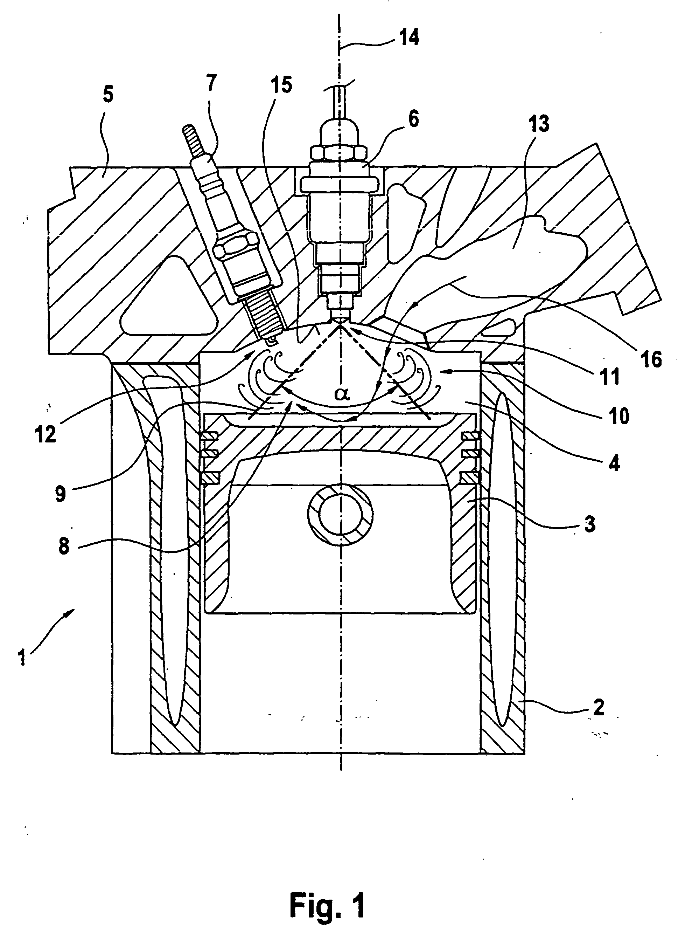

Fig. 1 zeigt eine direkteinspritzende Otto-Brennkraftmaschine 1, in deren Zylinder 2 ein Kolben 3 längsbeweglich angeordnet ist und mit der Innenwand 15 eines auf den Zylinder 2 aufgesetzten Zylinderkopfes 5 einen Brennraum 4 begrenzt. Im Zylinderkopf 5 ist ein Kraftstoff-Injektor 6 angeordnet, welcher zentral auf der Zylindermittelachse 14 liegend Kraftstoff auf den Kolben 3 gerichtet direkt in den Brennraum 4 einspritzt. Die zur inneren Gemischbildung erforderliche Verbrennungsluft 16 wird durch einen Einlaßkanal 13 dem Brennraum 4 zugeführt. Im Zylinderkopf 5 ist weiter eine Zündkerze 7 angeordnet, deren Elektroden 12 in den Brennraum 4 einragen, wobei zum Zündzeitpunkt ein Zündfunke zwischen den Elektroden 12 ausgelöst wird, welcher beim Überspringen zündfähiges Gemisch im Brennraum 4 durchschlägt.

Der Injektor 6 weist eine nach außen öffnende Einspritzdüse 11 auf, welche einen sich zum Kolben erweiternden, hohlkegelförmigen Kraftstoffstrahl erzeugt. Die Elektroden 12 der Zündkerze 7 liegen außerhalb der Mantelfläche 9 des von der Einspritzdüse 11 erzeugten Kraftstoffkegels 8 und werden so beim Einspritzvorgang nicht mit Kraftstoff benetzt.

Der Injektor wird piezoelektrisch betätigt, wobei die Einspritzdüse 11 von einem Piezoelement schnell und präzise einstellbar freigegeben und geschlossen wird. Durch die entsprechende Wahl der Einspritzzeit und deren präzise Einhaltung während des Arbeitsspiels mittels der piezoelektrischen Betätigung des Injektors wird die Ausbildung der gewünschten Freistrahlform des Kraftstoffkegels gefördert.

Die Brennkraftmaschine arbeitet in weiten Kennfeldbereichen im Schichtladungsbetrieb, wobei der Kraftstoff während des Kompressionstaktes des Zylinders 2 eingespritzt wird. Aufgrund der späten Kraftstoffeinspritzung während des Arbeitsspiels entsteht eine geschichtete Brennraumladung mit örtlich unterschiedlichen Kraftstoffkonzentrationen, wobei sich außerhalb des Kraftstoffkegels 8 sehr mageres Gemisch bildet bzw. reine Luft befindet.

Um zündfähiges Gemisch zwischen die Elektroden 12 der Zündkerze 7 zu bringen, weist die Brennkraftmaschine eine derartige Brennraumkonfiguration auf, daß der Kraftstoffkegel 8 in einem von der Brennraumbegrenzung durch die Zylinderkopf-Innenwand 15 weitgehend unbeeinflußten Freistrahl eingespritzt wird. Die Mantelfläche 9 des Kraftstoffkegels 8 kann weit von der Innenwand 15 entfernt liegen, wobei sich an dem vom Wandeinfluß der Brennraumbegrenzung entkoppelten Freistrahl Kraftstoffwirbel 10 bilden, welche aus der Mantelfläche 9 herausragen. Der Öffnungswinkel α des Kraftstoffkegels 8 beträgt zwischen 70° und 110°, wobei sich die Kraftstoffwirbel 10 am Kegelrand besonders ausgeprägt ergeben. Der optimale Öffnungswinkel α des Kraftstoffwinkels 8 wird von der Gestalt des Brennraumes beeinflußt, beispielsweise von der Kontur der Zylinderkopf-Innenwand oder auch der Ausrichtung der Aus- und Einlaßkanäle und der Gaswechselventile, das heißt der Strömungsrichtung der Verbrennungsluft im Brennraum 4. Bei einer ebenen Innenwand mit einem Neigungswinkel von 0° beträgt der optimale Öffnungswinkel α etwa 90°, wobei ausreichend kräftige Kraftstoffwirbel 10 am Kegelrand in einem Winkelbereich von etwa 20° oberhalb und unterhalb des optimalen Öffnungswinkels α ausgebildet werden. Mit zunehmender Neigung der Brennraumbegrenzung durch die Zylinderkopf-Innenwand 15 verringert sich der optimale Öffnungswinkel α um etwa 1° bis 2° bezogen auf etwa 10° Zunahme der Innenwandneigung.

Die Kraftstoffwirbel 10 entstehen aufgrund einer Luftströmung im Bereich der Mantelfläche 9 des Kraftstoffkegels durch vom Kraftstoffstrahl mitgerissene Luft, wobei dieser Strömung entgegengesetzt durch den entstehenden Unterdruck ebenfalls eine Luftströmung erzeugt wird. Die Kraftstoffwirbel 10 transportieren Kraftstoff in weit außerhalb des Kraftstoffkegels 8 liegende Brennraumbereiche und vermischen sich dort mit der Verbrennungsluft 16, die in einer Tumbleströmung gemäß Pfeilrichtung in den Brennraum 4 strömt. Bei der Tumbleströmung bewegt sich die Brennraumladung in einer Ebene, die in der Zylinderachse 14 liegt.

Die Zündkerze ist derart angeordnet, daß die Elektroden 12 in den Gemischwirbel 10 einragen. Auch im außerhalb des Kraftstoffkegels 8 liegenden Brennraumbereich, in dem sich die Elektroden 12 vor direkter Kraftstoffbenetzung geschützt befinden, kann so mit den bei Freistrahleinspritzung vorliegenden Kraftstoffwirbeln 10 zündfähiges Gemisch an der Zündkerze 7 bereitgestellt werden.

Die Kraftstoffwirbel 10 bilden sich nahezu unabhängig von der Brennraumform aus und die Innenwand 15 des Zylinderkopfes 5 kann daher beliebig gestaltet werden. Der Einspritzfreistrahl ist hohlkegelförmig, wodurch ein hoher Anteil der gesamten Kraftstoff-Einspritzmenge in der Mantelfläche 9 des Kegelstrahls 8 geführt wird und so von den Kraftstoffwirbeln 10 erfaßbar ist. Der Zündzeitpunkt kann in einem weiten Bereich im wesentlichen unabhängig vom Einspritzzeitpunkt variiert und bedarfsweise eingestellt werden, da die Kraftstoffwirbel über einen längeren Zeitraum stabil im Brennraum ausgeprägt werden und etwa 50° KW nach dem Einspritzende noch Kraftstoff an der Zündkerze 7 vorliegt.

Aufgrund der Stabilität der Kraftstoffwirbel 10 und des zur Zündung bereitstehenden langen Zeitraumes kann die Zündkerze 7 relativ weit vom Injektor 6 entfernt im Zylinderkopf angeordnet werden, wodurch sich die Brennraumkonfiguration und die konstruktive Gestaltung des Zylinderkopfes 5 wesentlich vereinfacht. Der Abstand der Funkenlage entsprechend der Anordnung der Elektroden 12 zur Einspritzdüse kann zwischen 7 mm und 30 mm betragen. Die Funkenlage ist dabei zwischen 1 mm bis 15 mm von der Mantelfläche 9 des Kraftstoffkegels 8 entfernt. Die Distanz der Elektroden 12 zum Kraftstoffkegel 8 wird entsprechend dem gewünschten Betriebsverhalten im jeweiligen Einsatzfall der direkteinspritzenden Otto-Brennkraftmaschine 1 gewählt.

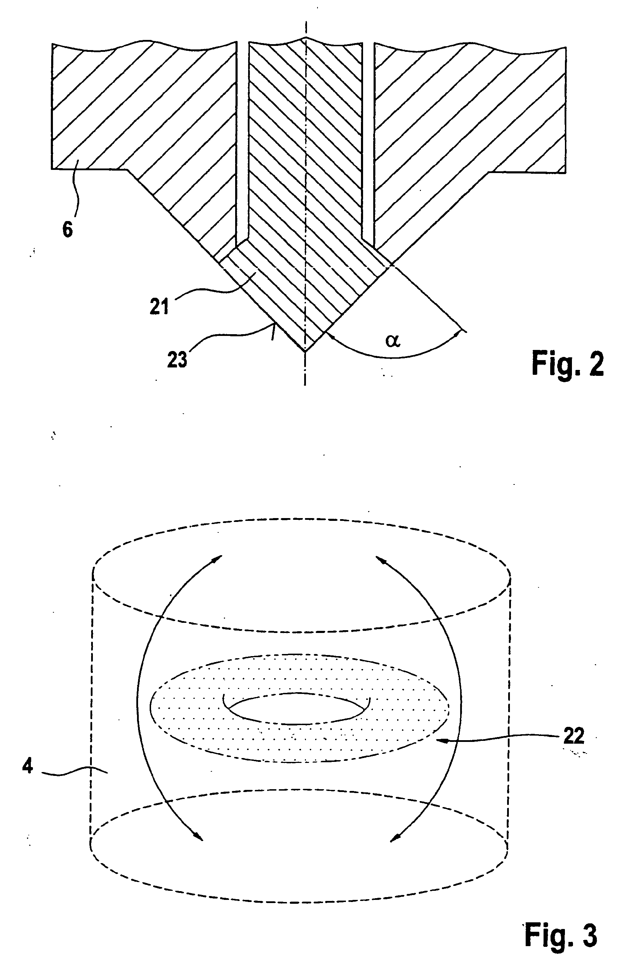

Fig. 2 zeigt eine Vergrößerung des in den Brennraum einragenden Endabschnitts des Injektors 6. In dem Injektor 6 ist eine längsverschiebliche Ventilnadel 21 angeordnet, welche nach außen, das heißt in den Brennraum öffnend das Verschlußglied des Injektors 6 bildet. Die Spitze der Ventilnadel 21 und der Ventilsitz des Injektors 6 sind derartig ausgebildet, daß der einzuspritzende Kraftstoffstrahl in einem Winkel α aus dem Injektor 6 austritt, welcher in einem Fenster zwischen 70° und 110° liegt. Besonders vorteilhaft tritt der Kraftstoffstrahl senkrecht zu den Oberflächen der außen liegenden Kanten 23 der Ventilnadel 21 aus, wodurch sich eine verringerte Empfindlichkeit der Ventilnadel bezüglich Ablagerungen oder der Bildung von Verkokungen ergibt. Der Austrittswinkel α bestimmt dabei den Öffnungswinkel des Hohlkegelstrahls, welcher durch den Injektor 6 erzeugt wird.

Fig. 3 zeigt in schematischer Darstellung einen Brennraum 4, in dem der Kraftstoff durch die hervortretenden Wirbel aus der Mantelfläche des eingespritzten Kraftstoffstrahls torusförmig konzentriert wird. Der Kraftstofftorus 22 wird sich bei der Gemischbildung im Innenraum 4 entsprechend der Strömungsrichtung der einströmenden Verbrennungsluft bewegen. Vorteilhaft sind sogenannte Tumble-Strömungen oder Reverse-Tumble, wobei sich eine Ladungsbewegung in Pfeilrichtung ergibt.

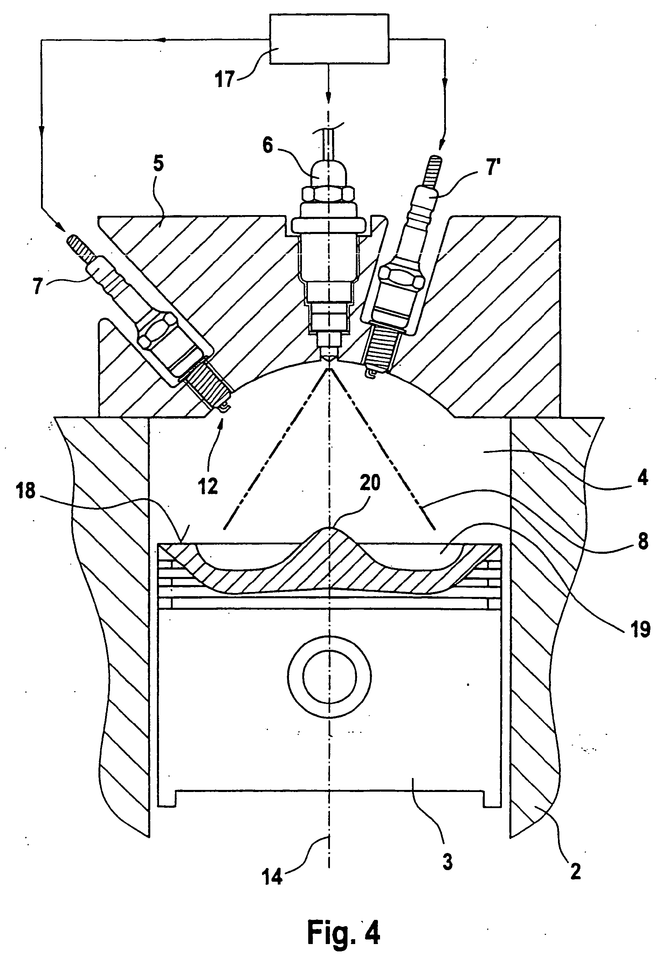

Fig. 4 zeigt eine Ausbildung der erfindungsgemäßen Otto-Brennkraftmaschine 1 mit zwei Zündkerzen 7, 7' pro Zylinder 2. Für gleiche Bauteile sind der Einfachheit halber die Bezugszeichen aus Fig. 1 vorgesehen.

Der Injektor 6 ist in zentraler Lage im Brennraum auf der Zylinderachse 14 angeordnet und spritzt einen hohlkegelförmigen Kraftstoffstrahl 8 in den Brennraum 4 ein. Die beiden Zündkerzen 7, 7' sind unsymmetrisch zur Zylinderachse 14 in unterschiedlichen Abständen zum Injektor 6 im Zylinderkopf 5 angeordnet. Die Funkenlagen entsprechen der jeweiligen Lage der Elektroden 12 der Zündkerzen 7, 7' und sind bei den beiden Zündkerzen relativ zum Kraftstoffkegel 8 unterschiedlich. Im Kennfeld der Brennkraftmaschine 1 sind bei verschiedenen Lastbereichen unterschiedliche Einspritzzeitpunkte im Hinblick auf das Betriebsverhalten der Brennkraftmaschine 1 vorteilhaft. Dabei treten aus dem Kegelmantel 8 Kraftstoffwirbel an unterschiedlichen Stellen abhängig von der Betriebsart (Schichtladungsbetrieb/homogene Gemischbildung) und den Betriebsbedingungen der Brennkraftmaschine auf. In Abstimmung mit der Mantelzone, in dem über das gesamte Schichtladungskennfeld der Brennkraftmaschine Kraftstoffwirbel auftreten können, sind die Zündkerzen 7, 7' angeordnet, wobei jede der Zündkerzen 7, 7' benachbart der Extremlagen der Kraftstoffwirbel in dem möglichen Kegelmantelbereich liegen. Auf diese Weise ist sichergestellt, daß in jedem Betriebspunkt mit Schichtladung der Brennkraftmaschine und unter sämtlichen möglichen Betriebsbedingungen die auftretenden Kraftstoffwirbel von mindestens einer der beiden zur Verfügung stehenden Zündkerzen 7, 7' zündbar ist.

Die Elektroden 12 beider Zündkerzen 7, 7' liegen außerhalb des Hohlkegelstrahls 8 und sind so vor direkter Benetzung mit Kraftstoff geschützt. Vorteilhaft bestimmt eine Steuereinheit 17 in Abhängigkeit der vorgesehenen Betriebsart der Brennkraftmaschine 1 und Meßwerten der Betriebsbedingungen der Brennkraftmaschine (z. B. Drehzahl, Last), welche der beiden Zündkerzen 7, 7' zur Zündung des Kraftstoff/Luft-Gemisches im Brennraum 4 eingesetzt wird. Entsprechende Daten zur Steuerung der Zündung können in einem Kennfeldspeicher der Steuereinheit 17 zur bedarfsweisen Entnahme zur Verfügung gestellt sein. Die Steuereinheit 17 koordiniert die Zündung, das heißt die Wahl der Zündkerze 7, 7' und den Zündzeitpunkt mit den Einspritzparametern und steuert den Injektor 6. Die Zündung erfolgt vorzugsweise nach der Beendigung des Einspritzvorganges, idealerweise in einem Zeitraum zwischen 0,1 ms und 1,5 ms nach dem Einspritzende.

Es kann zweckmäßig sein, beispielsweise unter extremen Betriebsbedingungen der Brennkraftmaschine, beide Zündkerzen 7, 7' im gleichen Arbeitsspiel des Kolbens 3 einzusetzen und durch eine Doppelzündung in unterschiedlichen Funkenlagen die sichere Gemischzündung sicherzustellen.

Der Kolben 3 weist in seinem Kolbenboden 18 eine Kolbenmulde 19 auf, welche mit einer turbinenschaufelartigen Kontur die Ausbildung der aus dem Kraftstoffstrahl 8 hervortretenden Kraftstoffwirbel unterstützt und insbesondere im Schichtladungsbetrieb zur Stabilisierung der torusförmigen Gemischwolke beiträgt. Die Kolbenmulde 19 weist eine mittige Erhebung 20 auf, welche etwa auf Höhe der Symmetrieachse des Hohlkegelstrahls 8 liegt, also bei der vorliegenden Brennraumkonfiguration sich in zentraler Lage im Kolbenboden 18 befindet. Die zentrale Erhebung wird von einer wulstartigen Einsenkung umgeben, wobei eine schaufelartige Kontur für den auftreffenden Kraftstoffstrahl gebildet ist.

## Patentansprüche

1. Verfahren zum Betrieb einer direkteinspritzenden fremdgezündeten Brennkraftmaschine, welche einen Brennraum (4), der in jedem Zylinder (2) von einem längsbeweglichen Kolben (3) mit einer Kolbenmulde und der Innenwand (15) eines Zylinderkopfes (5) begrenzt ist, und einen Injektor (6) mit einer Einspritzdüse (11) aufweist, mit folgenden Verfahrensschritten:
- dem Brennraum (4) wird Verbrennungsluft separat zugeführt,
- zur Bildung eines zündfähigen Kraftstoff/Luft-Gemisches wird Kraftstoff in einem Schichtladungsbetrieb während des Kompressionshubs mittels der Einspritzdüse (11) in den Brennraum (4) als ein von der Brennraumbegrenzung unbeeinflusster Freistrahl hohlkegelförmig eingespritzt,
- der Kraftstoff tritt möglichst senkrecht zur Oberfläche eines öffnenden Ventilglieds aus dem Injektor (6) aus, wobei
- die Elektroden (12) der Zündkerze außerhalb der Mantelfläche (9) des von der Einspritzdüse (11) erzeugten Kraftstoffkegels (8) liegen, und
- das Gemisch von der Zündkerze (7) gezündet wird.

2. Verfahren zum Betrieb einer direkteinspritzenden fremdgezündeten Brennkraftmaschine, welche einen Brennraum (4), der in jedem Zylinder (2) von einem längsbeweglichen Kolben (3) mit einer Kolbenmulde und der Innenwand (15) eines Zylinderkopfes (5) begrenzt ist, und einen Injektor (6) mit einer Einspritzdüse (11) aufweist, mit folgenden Verfahrensschritten:
- in den Brennraum (4) wird Verbrennungsluft in Form einer Tumblebewegung eingebracht,
- zur Bildung eines zündfähigen Kraftstoff/Luft-Gemisches wird Kraftstoff in einem Schichtladungsbetrieb während des Kompressionshubs mittels der Einspritzdüse (11) in den Brennraum (4) als ein von der Brennraumbegrenzung unbeeinflusster Freistrahl hohlkegelförmig eingespritzt, wobei
- die Elektroden (12) der Zündkerze außerhalb der Mantelfläche (9) des von der Einspritzdüse (11) erzeugten Kraftstoffkegels (8) liegen, und
- das Gemisch von der Zündkerze (7) gezündet wird.

3. Verfahren nach Anspruch 1 oder 2,
**dadurch gekennzeichnet, dass** sich aus der Mantelfläche (9) des eingespritzten Kraftstoffstrahls Kraftstoffwirbel (10) gebildet werden.

4. Verfahren nach einem der Ansprüche 1, 2 oder 3,
**dadurch gekennzeichnet, dass** die Elektroden (12) der Zündkerze (7) in die Kraftstoffwirbel (10) einragen.

5. Verfahren nach einem der Ansprüche 2 bis 4,
**dadurch gekennzeichnet, dass** die Verbrennungsluft erst einmal in einer Tumble-Strömung parallel zum Brennraumdach in den Brennraum eingebracht wird.

6. Verfahren nach einem der Ansprüche 2 bis 4,
**dadurch gekennzeichnet, dass** die Verbrennungsluft erst einmal in einer umgekehrten Tumble-Strömung in den Brennraum eingebracht wird.

7. Verfahren nach einem der Ansprüche 1 bis 6,
**dadurch gekennzeichnet, dass** im Brennraum eine drallförmige Ladungsbewegung gebildet wird.

## Claims

1. Method for operating a direct-injection spark-ignition internal combustion engine which has a combustion space (4), delimited in each cylinder (2) by a longitudinally movable piston (3) having a piston recess and by the inner wall (15) of a cylinder head (5), and an injector (6) having an injection nozzle (11), with the following method steps:
- combustion air is supplied separately to the combustion space (4),
- to form an ignitable fuel/air mixture, in a stratified-charge mode fuel is injected in the form of a hollow cone, as a free jet uninfluenced by the combustion-space boundary, into the combustion space (4) by means of the injection nozzle (11) during the compression stroke,
- the fuel emerges from the injector (6) as far as possible perpendicularly with respect to the surface of an opening valve member,
- the electrodes (12) of the spark plug lying outside the surface area (9) of the fuel cone (8) generated by the injection nozzle (11), and
- the mixture being ignited by the spark plug (7).

2. Method for operating a direct-injection spark-ignition internal combustion engine which has a combustion space (4), delimited in each cylinder (2) by a longitudinally movable piston (3) having a piston recess and by the inner wall (15) of a cylinder head (5), and an injector (6) having an injection nozzle (11), with the following method steps:
- combustion air is introduced in the form of a tumbling movement into the combustion space (4),
- to form an ignitable fuel/air mixture, in the stratified-charge mode fuel is injected in the form of a hollow cone, as a free jet uninfluenced by the combustion-space boundary, into the combustion space (4) by means of the injection nozzle (11) during the compression stroke,
- the electrodes (12) of the spark plug lying outside the surface area (9) of the fuel cone (8) generated by the injection nozzle (11), and
- the mixture being ignited by the spark plug (7).

3. Method according to Claim 1 or 2, **characterized in that** fuel vortices (10) are formed from the surface area (9) of the injected fuel jet.

4. Method according to one of Claims 1, 2 or 3, **characterized in that** the electrodes (12) of the spark plug (7) project into the fuel vortices (10).

5. Method according to one of Claims 2 to 4, **characterized in that** the combustion air is introduced into the combustion space first of all in a tumbling flow parallel to the combustion-space roof.

6. Method according to one of Claims 2 to 4,
**characterized in that** the combustion air is introduced into the combustion space first of all in a reversed tumbling flow.

7. Method according to one of Claims 1 to 6, **characterized in that** a swirl-like charge movement is formed in the combustion space.

## Revendications

1. Procédé pour le fonctionnement d'un moteur à combustion interne à injection directe et à allumage par étincelles, qui comprend une chambre de combustion (4), qui est délimitée dans chaque cylindre (2) par un piston (3) déplaçable longitudinalement avec un creux de piston et par la paroi intérieure (15) d'une tête de cylindre (5), et un injecteur (6) avec une buse d'injection (11), comprenant les étapes de procédé suivantes :
-- de l'air de combustion est alimenté séparément à la chambre de combustion (4),
-- pour former un mélange carburant/air capable de s'enflammer, on injecte le carburant, dans un mode de chargement en gradins pendant la course de compression au moyen de la buse d'injection (11) vers la chambre de combustion (4) sous la forme d'un jet libre en cône creux qui n'est pas influencé par la délimitation de la chambre de combustion,
-- le carburant sort de l'injecteur (6) le plus perpendiculairement possible par rapport à la surface d'un opercule de valve qui s'ouvre, et
-- les électrodes (12) de la bougie d'allumage sont situées à l'extérieur de la surface enveloppe (9) du cône de carburant (8) produit par la buse d'injection (11), et
-- le mélange est allumé par la bougie d'allumage (7).

2. Procédé pour le fonctionnement d'un moteur à combustion interne à injection directe et à allumage par étincelles, qui comprend une chambre de combustion (4), qui est délimitée dans chaque cylindre (2) par un piston (3) déplaçable longitudinalement avec un creux de piston et par la paroi intérieure (15) d'une tête de cylindre (5), et un injecteur (6) avec une buse d'injection (11), comprenant les étapes de procédé suivantes :
-- de l'air de combustion est amené dans la chambre de combustion (4) sous la forme d'un mouvement de Tumble,
-- pour former un mélange carburant/air capable de s'enflammer, on injecte le carburant, dans un mode de chargement en gradins pendant la course de compression au moyen de la buse d'injection (11) vers la chambre de combustion (4) sous la forme d'un jet libre en cône creux qui n'est pas influencé par la délimitation de la chambre de combustion, dans lequel
-- les électrodes (12) des bougies d'allumage sont situées à l'extérieur de la surface enveloppe (9) du cône de carburant (8) engendré par la buse d'injection (11), et
-- le mélange est allumé par la bougie d'allumage (7).

3. Procédé selon la revendication 1 ou 2,
**caractérisé en ce que** des tourbillons de carburant (10) sont formés à partir de la surface enveloppe (9) du jet de carburant injecté.

4. Procédé selon l'une des revendications 1, 2 ou 3, **caractérisé en ce que** les électrodes (12) de la bougie d'allumage (7) pénètrent dans le tourbillon de carburant (10).

5. Procédé selon l'une des revendications 2 à 4, **caractérisé en ce que** l'air de combustion est introduit dans la chambre de combustion tout d'abord dans un écoulement de Tumble parallèle au plafond de la chambre de combustion.

6. Procédé selon l'une des revendications 2 à 4, **caractérisé en ce que** l'air de combustion est introduit dans la chambre de combustion tout d'abord dans un écoulement de Tumble inverse.

7. Procédé selon l'une des revendications 1 à 6, **caractérisé en ce que** l'on forme dans la chambre de combustion un mouvement de chargement de forme giratoire.
